# EUROPEAN PATENT APPLICATION

(11) **EP 2 765 065 A2**
(43) Date of publication of application: **13.08.2014**
(21) Application number: 14153866.0
(22) Date of filing: 04.02.2014
(51) Int. Cl.: B62D 35/02

(54) **Rear axle beam cover**

(30) Priority: 07.02.2013 GB 201302177
(71) Applicant: Nissan Motor Manufacturing (UK) Ltd., Cranfield Bedfordshire MK43 0DB (GB)
(72) Inventor: Kremheller, Andreas, Cranfield, Bedfordshire MK430DB (GB)

(57) **Abstract**

The present invention provides a beam cover for improving the aerodynamic efficiency of a vehicle. The beam cover has a main section (102) with a leading edge portion (112), a trailing edge portion (114) and an intermediate portion (116) between the leading and trailing edge portion. It is used to cover the underside of the axle beam of the rear suspension of a vehicle.

## Description

### FIELD OF THE INVENTION

The present invention lies in the field of automotive technology and, more specifically, in the field of aerodynamic devices for vehicles. In particular, the invention relates to a cover for deflecting airflow around the underside of a vehicle.

### BACKGROUND OF THE INVENTION

As a result of increased fuel prices and environmental issues, automotive manufacturers are generally aiming to develop more fuel efficient vehicles with lower emissions. The majority of consumers are also interested in purchasing vehicles with improved fuel efficiency, since buying fuel is a major cost of owning a vehicle.

Since the dominant resistance force for many vehicles is drag (air resistance), a cost effective way to reduce the fuel consumption of a vehicle is to alter the shape of the vehicle chassis in a manner that reduces the drag. The main focus in this area has been on improving the aerodynamic shape of the upper vehicle body. However, improving the aerodynamic shape of vehicle underbodies / undersides can also provide drag reduction.

When a vehicle is in motion, the air moving past the front of the vehicle creates a low pressure fast-moving airflow to the underside of the car. Drag originates from the pressure difference between the stagnation pressure at the front of the vehicle and the base pressure at the rear. The drag can therefore be reduced by reducing the difference in these pressures. Reducing drag is desirable, as it leads to lower fuel consumption.

JP2005053321 discloses a cover for the entire underside of a vehicle formed from an array of connected covers. A disadvantage of JP2005053321 is that the majority of the underside of the vehicle is covered and is therefore not easily accessible for repairs / general mechanical work. A further disadvantage of the invention of JP2005053321 is that each separate cover has to be fixed to a corresponding moving part of the suspension.

Accordingly, in view of the above, there is a need in the art for a better method of improving the aerodynamic efficiency of a vehicle underside. The present invention seeks to overcome, or at least alleviate, some of the problems in the prior art.

### SUMMARY OF THE INVENTION

In a first aspect, the present invention resides in a beam cover for improving the aerodynamic efficiency of a vehicle, the cover comprising a main section for covering the underside of the axle beam of the vehicle rear suspension and left and right side sections adjoining the main section having fixing points for securing the cover to the vehicle underside, wherein the main section has a leading edge portion for deflecting airflow around the front edge of the axle beam, a trailing edge portion, and an intermediate portion between the leading and trailing edge portions having a substantially flat under-surface.

As will be appreciated, without the beam cover, the torsion beam of the rear suspension protrudes into the airstream of the vehicle under body. The force generated by the airflow and the relatively large surface area on the beam create a pressure which acts against the vehicle's motion. Furthermore the airflow is disturbed in such a way that it collides with downstream parts such as the rear exhaust muffler. The overall result is an unwanted pressure loss on the rear end of the vehicle.

By contrast, the use of a beam cover in accordance with the invention provides several advantages. For example, the beam cover of the present invention provides improved aerodynamic efficiency by deflecting air from the axle beam of the rear suspension. In particular, the leading edge portion, which wraps around the beam and the flat surface of the intermediate portion, deflects the airflow so as to reduce stagnation on the underbody of the vehicle. The beam cover also reduces the negative effect associated with the rear wake and, as a result, drag may be decreased by approximately 3 %. Such a drag reduction allows for improvement in fuel efficiency of the vehicle and thereby lowers fuel consumption.

Preferably, the leading edge portion of the cover extends substantially normally with respect to the intermediate portion, and the leading edge and intermediate portions are bridged by a rounded portion for wrapping around the front edge of the axle beam. Desirably, the rounded portion bridging the leading edge and intermediate portions has a width of from about 40 mm to about 60 mm, preferably about 50 mm.

The invention provides the advantage that the cover fits over and wraps around the front edge / underside of the axle beam, thereby shielding it from airflow. Suitably, the intermediate portion is substantially horizontal in use. When the vehicle is in motion, this is advantageous, because the airflow, instead of meeting an isolated axle beam, meets a substantially flat / horizontal beam cover, which deflects the air in a more ordered manner.

Desirably, the main section has a profile for deflecting airflow to pass the rear exhaust muffler and rear bumper cavity. In this manner, the airflow is not interrupted after passing the beam cover and the aerodynamic efficiency of the vehicle is further improved.

Suitably, the trailing edge portion is raised at an angle with respect to the intermediate portion for avoiding accumulation of snow when the vehicle is in reverse mode. If the trailing edge portion were to be lowered at an angle, then it would interrupt the airflow as it passed the beam cover and the aerodynamic efficiency would be reduced.

Preferably, the beam cover is a unitary element, most preferably an injection moulded element, such as injection moulded polypropylene. It is advantageous for the beam cover to comprise a single element, as it not only simplifies the manufacture of the cover, but also simplifies the procedure for fitting the cover to a vehicle underside.

Advantageously, the beam cover comprises a flexible material for accommodating torsion movement of the axle beam. In this way, the cover is more likely to resist cracking if strain is placed upon it, for example, by movement of the axle beam.

Suitably, the width of the intermediate portion is optimised according to the dimensions of the axle beam, preferably from about 80 mm to about 150 mm, most preferably about 100 mm. In addition, the intermediate portion may be substantially flat over its width. The precise dimensions of the beam cover depend on those of the axle beam and effectively may be "tuned" to deflect airflow in a similar manner to that of a roof spoiler.

Conveniently, the trailing edge portion is provided with cut-outs to provide clearance for the vehicle exhaust pipe and jack point. This makes it easier for any mechanical work to be done to the underside of the vehicle body without necessarily having to remove the beam cover.

In a preferred embodiment, each side section has a forward portion and a rear portion, each forward portion having a fixing point for securing the cover to a fixed point on the vehicle underside. Suitably, the rear portions of the side sections may also have fixing points for attaching to the vehicle underside. The fixing portions allow the beam cover to be secured to a vehicle underside easily and securely.

Desirably, the cover may further comprise reinforcing fillets between the main section and the side sections for improving rigidity of the cover. Whilst it is advantageous that the cover be flexible, it is also necessary that the cover holds it shape correctly so that the airflow is directed in a manner that improves the aerodynamic efficiency of the vehicle when the cover is in use.

In addition to improving the aerodynamic efficiency of the vehicle, the beam cover of the invention provides a further advantage in that it protects the fuel tank from stone chipping. For example, if the beam cover were not secured to the vehicle underside over the axle beam, the bare metal axle beam would be able to deflect stones into the fuel tank when the vehicle is in motion, which is a safety concern. When the beam cover is in use, stones are generally no longer deflected towards the fuel tank, because the material of the beam cover can absorb most of the momentum of the stones.

From a further aspect, the present invention resides in a vehicle of the type comprising a torsion beam rear suspension, wherein the vehicle is fitted with a beam cover for deflecting airflow to reduce stagnation on the vehicle underbody when the vehicle is in motion.

It will be appreciated that preferred and/or optional features of the first aspect of the invention may be incorporated in the second aspect of the invention, alone or in appropriate combination.

These and other aspects, objects and benefits of this invention will become still more clear and apparent on studying the details of this invention as set out below, and the appended claims.

### BRIEF DESCRIPTION OF THE DRAWINGS

The invention will be further described, by way of example only, with reference to the accompanying drawings, in which:
Figure 1 shows a beam cover in accordance with a first aspect of the invention, comprising a main section and left and right side sections adjoining the main section with fixing points for securing the cover to the vehicle underside;
Figure 2A shows a cross-sectional view of the centre of the main section of the beam cover of Figure 1;
Figure 2B shows a cross-sectional view of the edge of the main section of the beam cover, close to where it joins a side section of the beam cover of Figure 1;
Figure 3 shows the beam cover of the invention in use;
Figure 4A shows the result of a computational fluid dynamics test on a vehicle when the beam cover of the invention is not in use;
Figure 4B shows the result of a computational fluid dynamics test on a vehicle when the beam cover of the invention is in use;
Figure 5 shows a perspective view of the beam cover of the invention;
Figure 6A shows an optimised cross-sectional view of the angle of the main section of the beam cover of Figure 5;
Figure 6B shows a graph showing the results of the optimisation of the angle of the main section with respect to the vehicle underside of the beam cover of Figure 5;
Figure 6C shows an optimised cross-sectional view of the width of the main section of the beam cover of Figure 5;
Figure 6D shows a graph showing the results of the optimisation of the width of the main section of the beam cover of Figure 5;
Figure 6E shows an optimised cross-sectional view of the radius of the leading edge portion of the beam cover of Figure 5; and
Figure 6F shows a graph showing the results of the optimisation of the radius of the leading edge portion of the beam cover of Figure 5.

### DETAILED DESCRIPTION OF PREFERRED EMBODIMENTS

Specific embodiments of the invention are described in the accompanying drawings.

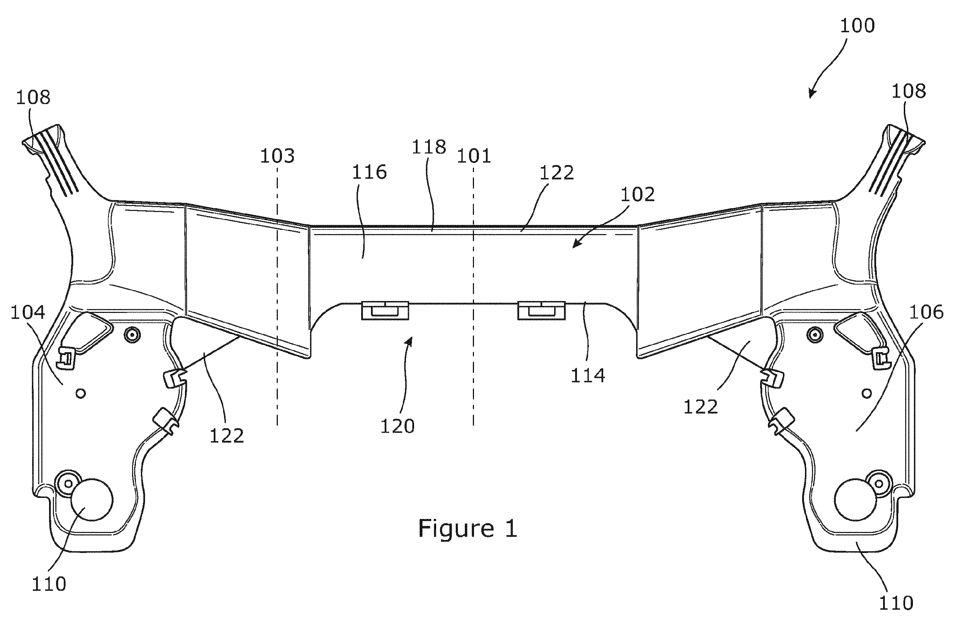

Figure 1 shows a first embodiment of the beam cover (100) of the invention, comprising a main section (102) for covering the underside of the axle beam of the rear suspension of a vehicle, and left and right side sections (104, 106), which adjoin the main section (102). In this embodiment, the left and right side sections (104, 106) each have forward and rearward fixing points (108, 110), for securing the beam cover (100) to the vehicle underside. In this embodiment, the main section (102) has a leading edge portion (112), a trailing edge portion (114), and an intermediate portion (116) between the leading and trailing edge portions (112, 114) having a substantially flat under-surface.

In Figure 1, the leading edge portion (112) of the beam cover (100) extends substantially normally with respect to the intermediate portion (116), and the leading edge and intermediate portions (112, 116) are bridged by a rounded portion (118) for wrapping around the front edge of the axle beam. The leading edge portion (112) has a width of from about 40 mm to about 60 mm, preferably about 50 mm. When the vehicle is in use, the aerodynamic efficiency of a vehicle is improved because the leading edge portion (112) of the beam cover (100) deflects airflow around the front edge of the axle beam, thereby decreasing the drag on the vehicle (measured as the drag area coefficient).

The trailing edge portion (114) of the beam cover (100) shown in Figure 1 has a cut-out section (120), which provides clearance for the exhaust pipe and the jack point. It would be disadvantageous to cover the exhaust pipe as the fumes from the exhaust would collect inside the beam cover (100).

The beam cover (100) of Figure 1 also has reinforcing fillets (122) between the main section (102) and the side sections (104, 106) to improve rigidity of the structure. Furthermore, the side sections (104, 106) of the beam cover (100) have fixing points and both the forward and rearward fixing points (108, 110) of the side sections (104, 106) have means to clip / attach the beam cover (100) to fixed points of the vehicle structure.

The dashed line (101) indicates the centre of the main section (102) and the dashed line (103) is placed at the edge of the main section (102), close to where it joins a side section (104, 106) of the beam cover (100).

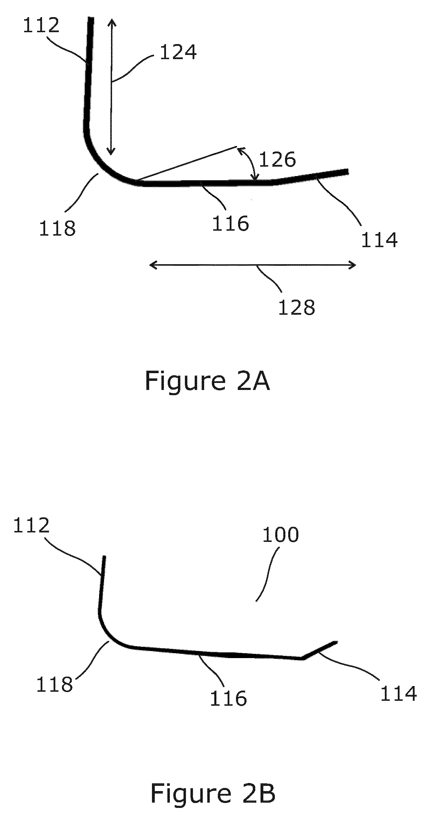

Figure 2A shows a cross-sectional view of the centre of the main section (102) of the beam cover (100) of Figure 1. The cross section in Figure 2A therefore relates to the cross section at the dashed line (101) of Figure 1.

It can be seen from Figure 2A that the leading edge portion (112) of the beam cover (100) extends substantially vertically, and that the leading edge portion (112) and intermediate portion (116) are bridged by a rounded portion (118) for wrapping around the front edge of the axle beam. The leading edge portion (112) has a radius (124), and the optimal radius (124) is about 50 mm.

As can be seen from Figure 2A, the angle (126) of the main section (102) with respect to the underside of the vehicle is optimally about 0°. If this angle (126) is increased, then the main section (102) is angled towards the ground, and the air flow will be directed away from the underside of the vehicle, but also at least partially into the ground, which is not ideal. If this angle (126) is decreased, then the main portion slopes towards the underside of the vehicle, and the air will be directed onto the underside of the vehicle, which is also not desirable as the drag area coefficient will be increased.

Figure 2A shows that the main section (102) has a width (128), which is determined as the length from the point where the leading edge (112) meets the intermediate portion (116) to the far end of the trailing edge. The optimal width (128) for the main section (102) is about 100 mm.

Furthermore, it can be seen from Figure 2A that the trailing edge portion (114) is raised at an angle with respect to the intermediate portion (116) and is directed slightly towards the underside of the vehicle.

Figure 2B shows a cross-sectional view of the edge of the main section (102) of the beam cover (100), close to where it joins a side section (104, 106) of the beam cover (100) of Figure 1. The cross section in Figure 2B therefore relates to the cross section at the dashed line (103) of Figure 1.

It can be seen from Figure 2B that the leading edge portion (112) of the beam cover (100) extends substantially vertically at this point (in a similar manner to that shown in Figure 2A) and that the leading edge portion (112) and intermediate portion (116) are bridged by a rounded portion (118) for wrapping around the front edge of the axle beam.

By comparison with Figure 2A, the leading edge portion (112) at the position shown by dashed line (103) is slightly shorter than at the position shown by dashed line (101). In addition, the main section (102) is wider than at the position shown by dashed line (101). Furthermore, it can be seen that the trailing edge portion (114) is raised at a larger angle with respect to the intermediate portion (116) than in Figure 2A, in order to cover the mechanical parts of the underside of the vehicle effectively.

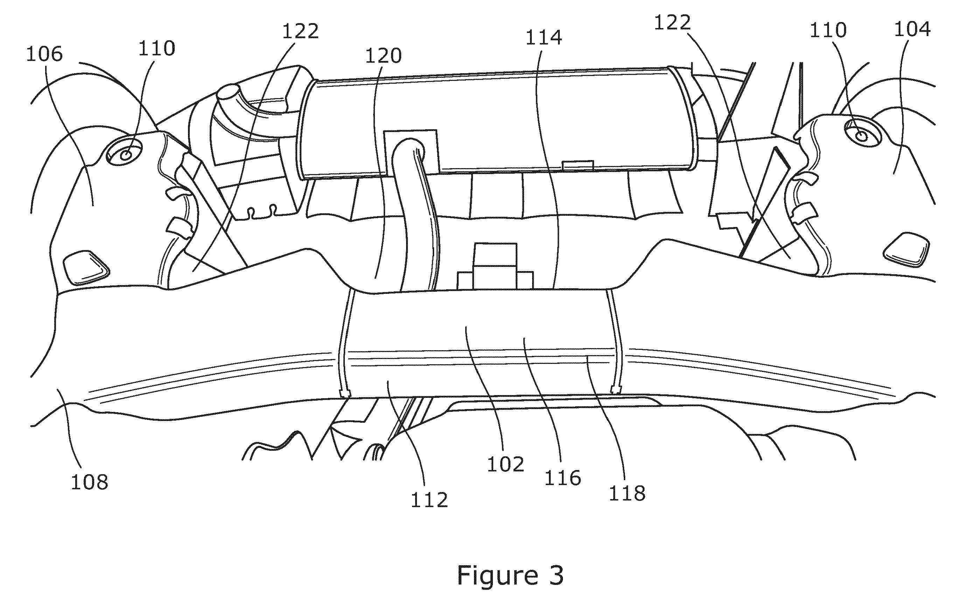

Figure 3 shows an embodiment of the beam cover (100) of the invention in use. As can be seen from Figure 3, the beam cover (100) is designed to be attached to the vehicle underside / underbody in such a way so as to effectively cover the axle beam of the rear suspension. The dimensions of the beam cover (100) are therefore designed to be compatible with the dimensions of the underside of the particular vehicle to which it will be fitted.

The beam cover (100) in Figure 3 is attached over the torsion beam rear suspension, which consists of a long metal bar that is attached to the vehicle chassis / underside. The opposite end of the torsion beam rear suspension terminates in a lever mounted perpendicular to the axle beam and is attached to the axle of the suspension arm. Vertical motions of the wheel cause the axle beam to rotate along its axis and are restricted by the axle beam's torsion resistance. It is a more compact and cheaper solution compared to the independent rear suspension.

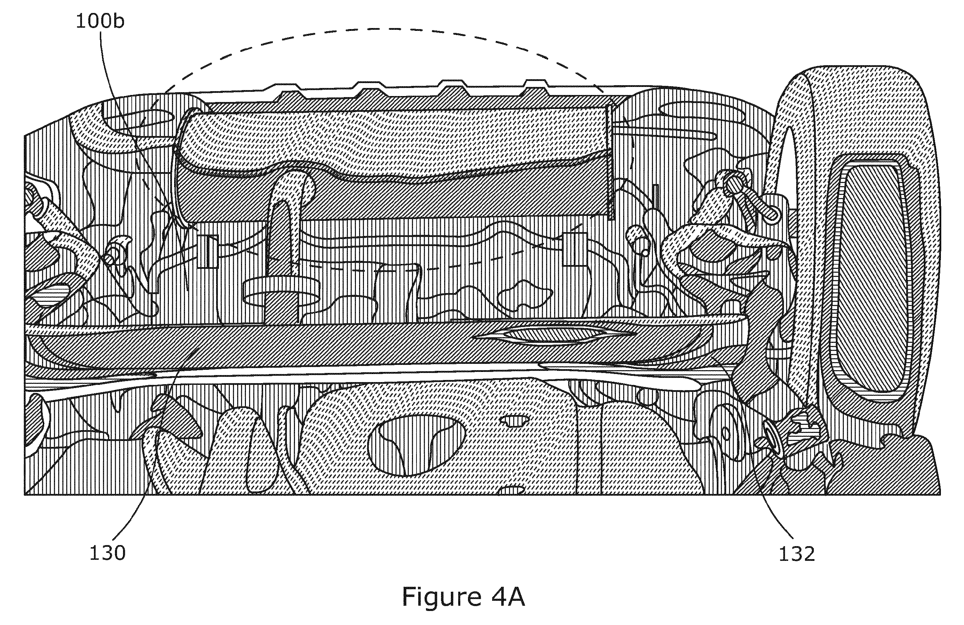

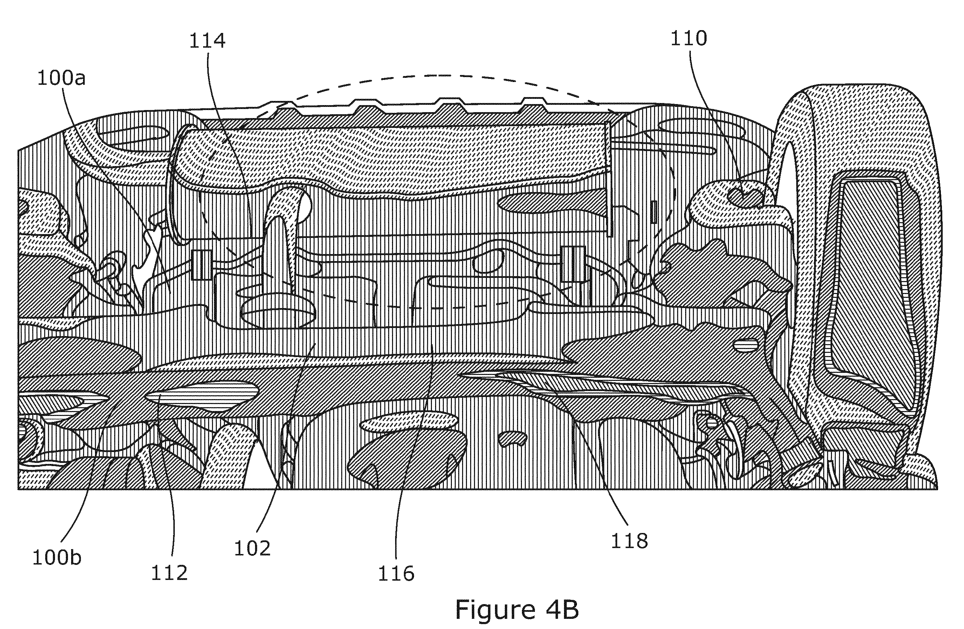

Turning to Figures 4A and 4B, the shape of the beam cover (100) of the invention was optimised by testing a full scale aerodynamics clay model in a wind tunnel.

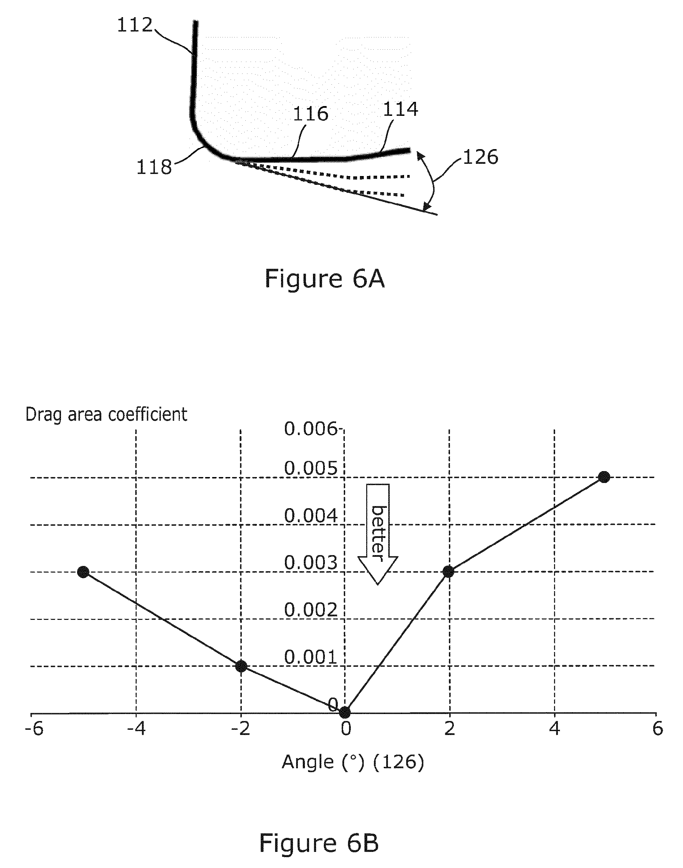

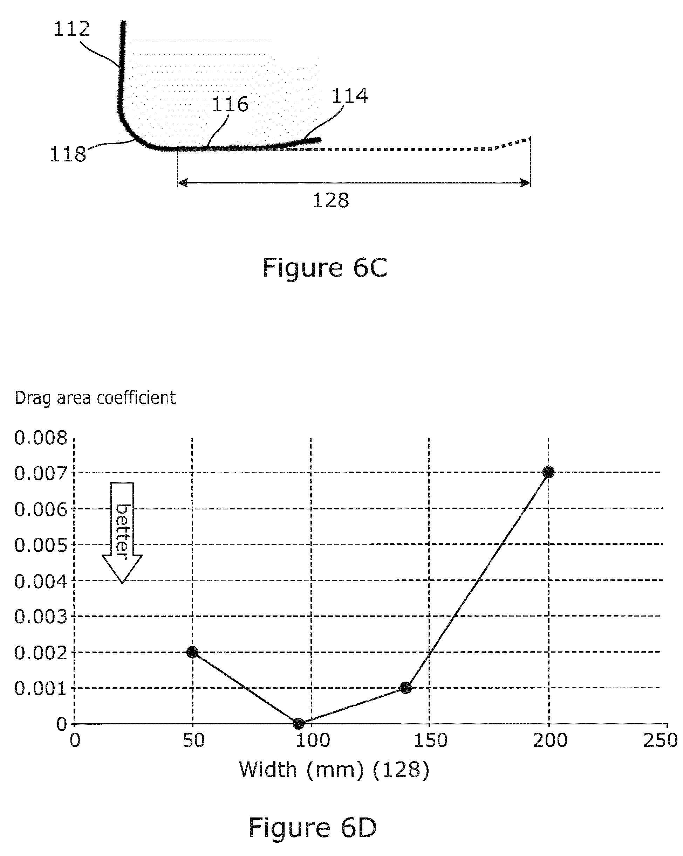

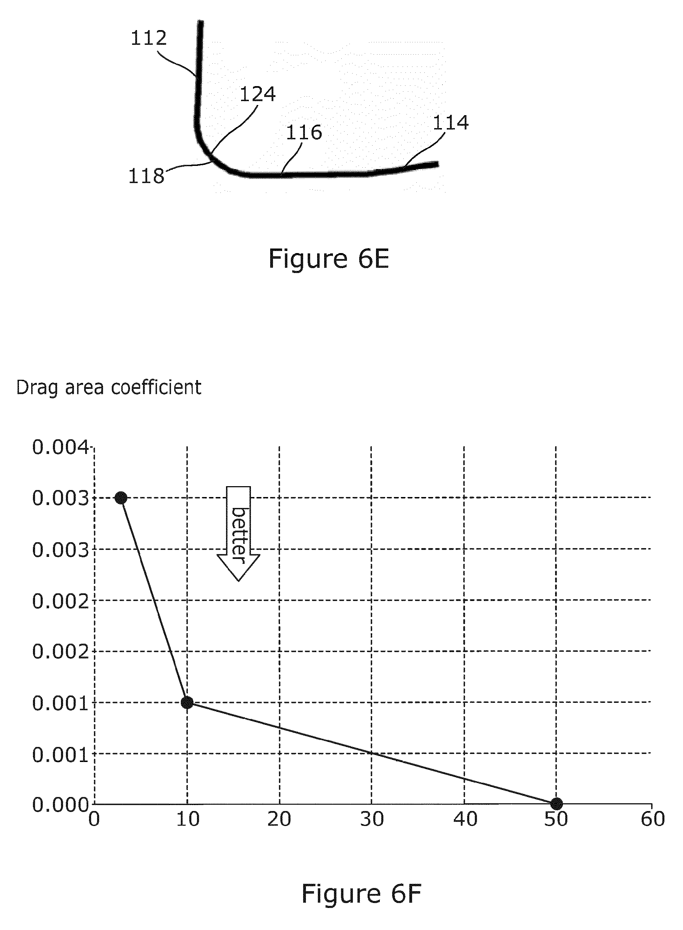

The overall dimensions of the beam cover (100) were limited due to the dimensions of the torsion beam itself, which has a certain size / shape. Within this limitation, the following parameters were tested and optimised to give the best aerodynamic performance:
- angle (126) of the main section (102) with respect to the vehicle underside (see Figures 6A and 6B);
- width (128) of the main section (102) (see Figures 6C and 6D);
- radius (124) of the leading edge portion (112) (see Figures 6E and 6F); and
- cut-out detail (120) on the main section (102) (not shown in the Figures).

The simulations showed that an improvement, i.e., a reduction, of the drag force can be achieved when using the beam cover (100) of the present invention in comparison with not using a cover.

The contour lines in Figures 4A and 4B indicate areas of higher stagnation pressure (100a) and lower pressure (100b), and show a reduction in drag force with the beam cover.

Figure 4A shows the result of a computational fluid dynamics test when the beam cover (100) of the invention is not in use. When a beam cover (100) is not used, the axle beam (130) of the rear suspension (132) protrudes into the airstream going past the underside of the vehicle. The force generated by the airflow and the relatively big surface area of the axle beam (130) creates a pressure that acts against the vehicle's forward motion. Furthermore, the airflow is disturbed in such a way that it collides with downstream parts of the vehicle, such as the rear exhaust muffler. The overall result is an unwanted pressure loss on the rear end of the vehicle.

Figure 4B shows the result of a computational fluid dynamics test when the beam cover (100) of the invention is in use. The beam cover (100) has a rounded front edge portion (118) that wraps around the axle beam (130), and a flat surface for guidance of the airflow. The horizontal inclination of the beam cover (100) at the intermediate portion (116) is used to deflect the airflow in order to pass the rear exhaust muffler and rear bumper cavity. As a result, the forces acting on the torsion beam, rear muffler and rear bumper are reduced. As well as reducing the drag area coefficient, the beam cover (100) also improves stability at high speed.

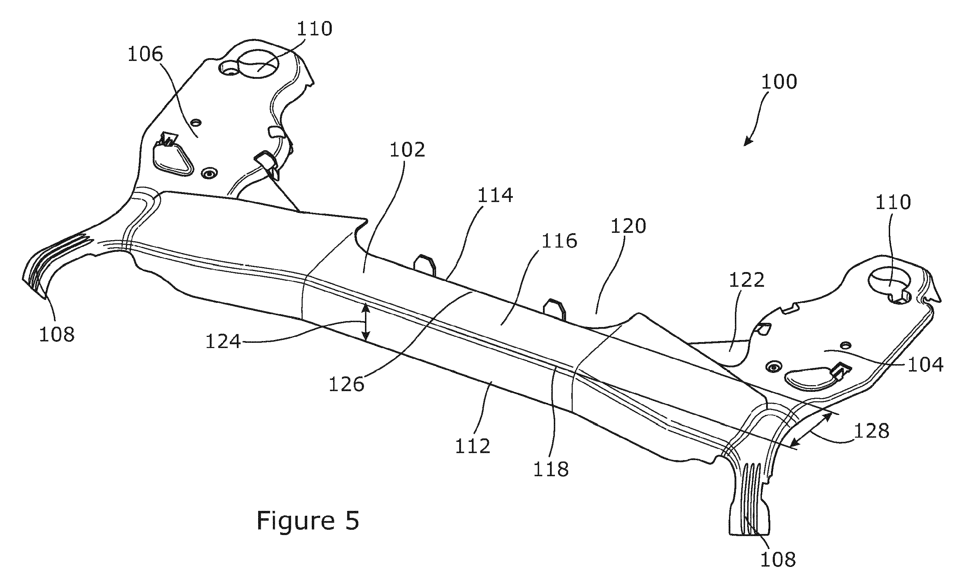

Figure 5 shows a perspective view of an embodiment of the beam cover (100) of the invention. The width (128) of the main section (102), angle (126) of the main section (102) with respect to the vehicle underside, radius (124) of the leading edge portion (112); and cut-out detail (120) on the main section (102) are all shown in Figure 5.

It can also be seen from Figure 5 that the beam cover (100) is a unitary element (preferably an injection moulded element such as injection moulded polypropylene), which is advantageous because it is simple both to manufacture and to fix to the vehicle underside.

Figure 6A shows an optimised cross-sectional view of the angle (126) of the main section (102) of the beam cover (100) of Figure 5 with respect to the vehicle underside. As shown in Figure 6A, the angle (126) of the main section (102) with respect to the vehicle underside can be varied positively or negatively with respect to the horizontal.

The results of an experiment to optimise the angle (126) of the main section (102) with respect to the vehicle underside are shown in Figure 6B, where a lower drag area coefficient is desirable. As shown in Figure 6B, the optimum angle (126) is about 0°; therefore the intermediate portion (116) of the main section (102) is substantially flat over its width (128).

Figure 6C shows an optimised cross-sectional view of the width (128) of the main section (102) of the beam cover (100) of Figure 5. The width (128) of the main section (102) is determined starting from the termination of leading edge portion (112) and ending at the rear edge of the trailing edge portion (114). The main section (102) covers the axle beam (130) assembly, so the width (128) is at least partially determined by dimensions of the axle beam (130).

As seen in Figure 6D, the optimum width (128) for the main section (102) is about 100 mm. The drag area coefficient of the beam cover (100) increases significantly above 150 mm and it is therefore not desirable to have the main section (102) of this width (128). Figure 6E shows an optimised cross-sectional view of the radius (124) of the leading edge portion (112) of the beam cover (100) of Figure 5.

As can be seen from Figure F, the optimal radius (124) of the leading edge portion (112) is about 50 mm. Decreasing the radius (124) of the leading edge portion (112) increases the drag area coefficient, which increases significantly above about 10 mm, and drastically above about 2.5 mm. Increasing the radius (124) of the leading edge portion (112) above about 50 mm is not practical, due to difficulty in fitting the beam cover (100) close to the front of the beam. Moving the fitting of the beam cover (100) means that the width of the beam cover (100) must be increased, thus reducing the efficiency of the beam cover (100).

The above embodiments of the invention are described for the purposes of illustrating the invention only and are not to be read as limiting the scope of the invention, which is defined by the appended claims.

## Claims

1. A beam cover for improving the aerodynamic efficiency of a vehicle, the cover comprising a main section for covering the underside of the axle beam of the rear suspension and left and right side sections adjoining the main section with fixing points for securing the cover to the vehicle underside, wherein the main section has a leading edge portion for deflecting airflow around the front edge of the axle beam, a trailing edge portion, and an intermediate portion between the leading and trailing edge portions having a substantially flat under-surface.

2. A cover according to claim 1, wherein the leading edge portion extends substantially normally with respect to the intermediate portion, and the leading edge and intermediate portions are bridged by a rounded portion for wrapping around the front edge of the axle beam.

3. A cover according to claim 2, wherein the rounded portion bridging the leading edge and intermediate portions has a width of from about 40 to about 60 mm, preferably about 50 mm.

4. A cover according to any preceding claim, wherein the intermediate portion is substantially horizontal in use.

5. A cover according to any preceding claim, wherein the main section has a profile for deflecting airflow to pass the rear exhaust muffler and rear bumper cavity.

6. A cover according to claim 1, wherein the trailing edge portion is raised at an angle with respect to the intermediate portion for avoiding accumulation of snow when the vehicle is in reverse mode.

7. A cover according to any preceding claim, wherein the cover is a unitary element, preferably an injection moulded element.

8. A cover according to any preceding claim, wherein the cover comprises a flexible material for accommodating torsion movement of the axle beam.

9. A cover according to any preceding claim, wherein a length of the intermediate portion is optimised according to the dimensions of the axle beam, preferably from about 80 mm to about 150 mm, most preferably about 100 mm.

10. A cover according to claim 9, wherein the intermediate portion is substantially flat over the length of the intermediate portion.

11. A cover according to any preceding claim, wherein the trailing edge portion is provided with cut-outs to provide clearance for the vehicle exhaust pipe and jack point.

12. A cover according to any preceding claim, wherein each side section has a forward portion and a rear portion, each forward portion having a fixing point for securing the cover to a fixed point on the vehicle underside.

13. A cover according to any preceding claim, wherein the rear portions of the side sections have fixing points for attaching to the vehicle underside.

14. A cover according to any preceding claim, further comprising reinforcing fillets between the main section and the side sections for improving rigidity of the cover.

15. A vehicle of the type comprising a torsion beam rear suspension, wherein the vehicle is fitted with a beam cover for wrapping around the beam and deflecting airflow to reduce stagnation on the vehicle under body when the vehicle is in motion.

16. A vehicle according to claim 15, wherein the beam cover is in accordance with any one of claims 1 to 14.
